# EUROPÄISCHE PATENTANMELDUNG

(11) **EP 4 674 752 A1**
(43) Veröffentlichungstag der Anmeldung: **07.01.2026**
(21) Anmeldenummer: 25186564.8
(22) Anmeldetag: 01.07.2025
(51) Int. Cl.: B64D 1/04, B64D 1/06, B64D 7/00, F41F 3/06, B64C 1/00

(54) **WAFFENBEHÄLTER FÜR EIN SCHWER ORTBARES LUFTFAHRZEUG UND SELBIGES**

(30) Priorität: 02.07.2024 DE 102024118744
(71) Anmelder: Airbus Defence and Space GmbH, 82024 Taufkirchen (DE)
(72) Erfinder: STANGL, Wolfgang, 82024 Taufkirchen (DE)
(74) Vertreter: LKGLOBAL Partnerschaftsgesellschaft mbB

(57) **Zusammenfassung**

Es wird ein Waffenbehälter (10) für ein schwer ortbares Luftfahrzeug (1), insbesondere für ein überschallfähiges Tarnkappenluftfahrzeug, vorgeschlagen, mit einem Aufnahmeraum (19) für einen Lenkflugkörper (50), mit wenigstens zwei Behälterschalenelementen (12), die dazu ausgestaltet sind, in einem geschlossenen Zustand (C) des Waffenbehälters (10) den Aufnahmeraum (19) zu umschließen und in einem geöffneten Zustand (O) des Waffenbehälters (10) den Aufnahmeraum (19) zur Absetzung des Lenkflugkörpers (50) zu öffnen, und mit einer Betätigungsvorrichtung (20), die dazu ausgestaltet ist, die wenigstens zwei Behälterschalenelemente (12) zur Erreichung des geöffneten und/oder des geschlossenen Zustandes zumindest abschnittsweise gleichzeitig und/oder sequenziell zu betätigen, sowie ein Luftfahrzeug (1), insbesondere überschallfähiges Tarnkappenluftfahrzeug, mit wenigstens einem solchen Waffenbehälter (10).

## Beschreibung

### Technisches Gebiet

Die vorliegende Offenbarung betrifft einen Waffenbehälter für ein schwer ortbares Luftfahrzeug, insbesondere für ein überschallfähiges Tarnkappenluftfahrzeug, sowie ein Fahrzeug Luftfahrzeug, insbesondere überschallfähiges Tarnkappenluftfahrzeug.

### Technischer Hintergrund

Die Tarnung von Fahrzeugen, wie beispielsweise militärischen Kampfflugzeugen und Ausrüstungen, vor Radarerfassung ist eine immer häufigere Forderung für aktuelle und zukünftige Waffensysteme. Es gibt verschiedene Möglichkeiten zur Verringerung einer Erkennbarkeit durch Radarsysteme, wie z.B., den Radarrückstreuquerschnitt (*radar cross section -* RCS) zu reduzieren, durch radarabsorbierendes Material (*radar absorbing material -* RAM) und/oder radarabsorbierende Strukturen (*radar absorbing structure -* RAS). Anhand dieser Möglichkeiten muss die Erkennbarkeit des Luftfahrzeugs in seiner Gesamtheit reduziert werden, also sowohl das Fahrzeug als solches als auch etwaige Anbauten oder Lasten, wie beispielsweise Waffen oder Waffensysteme.

Schwer erkennbare Luftüberlegenheitskampfflugzeuge (*stealth air superiority fighters*) oder auch Tarnkappenluftfahrzeuge müssen verschiedene Arten von Waffen in der Regel intern in ihrer Waffenbucht tragen, um ihren Radarquerschnitt niedrig und zu halten und einen Überlebensfähigkeitsvorteil zu erlangen. Die maximale Waffenlast innerhalb der Waffenbucht ist durch die Größe der Waffenbucht begrenzt. Die Größe der Waffenbucht wiederum ist ein auslegungsbestimmender Faktor für eine Gesamtgröße eines Kampfflugzeuges.

Wenn für bestimmte Missionen größere Waffenlasten mitgeführt werden sollen, wie beispielsweise insbesondere zusätzliche Luft-Luft-Bewaffnung, werden diese zusätzlichen Waffen gemäß Stand der Technik üblicherweise an Pylonen unterhalb der Flügel befestigt. Allerdings vergrößern auf diese Art mitgeführte Waffen dramatisch den Radarquerschnitt des Luftfahrzeugs, insbesondere aufgrund der Tatsache, dass der Pylon, seine etwaige Raketenstartschiene sowie ein Sucher einer Luft-Luft-Rakete wesentlich zum gesamten Radarquerschnitt beitragen, da diese Elemente nicht mit Radarabsorber versehen sind bzw. versehen werden können.

DE 10 2004 029 487 B4, beispielsweise, betrifft ein Fluggerät mit einer Waffenschachtanordnung, das einen Rumpf mit einem an einer Rumpfunterseite angeordneten Fahrwerk und mit einer dieser entgegengesetzt angeordneten Rumpfoberseite aufweist, wobei - an der Rumpfoberseite eine Waffenträger-Einrichtung angeordnet ist, - die Waffenträger-Einrichtung im Querschnitt des Rumpfes an der Stelle eines Hauptfahrwerks betrachtet oberhalb Fahrwerkschachten des Hauptfahrwerks und oberhalb eines Triebwerk-Strömungskanals angeordnet ist, - das Fluggerät eine Flugrechner-Einrichtung mit einer Steuerungs- und Missions-Funktion sowie eine Stell-Einrichtung zur Bewegung von Steuerflächen zur Steuerung des Fluggerätes aufweist, wobei die Steuerungs- und Missions-Funktion eine Flugführungs-Funktion zur Hinführung des Fluggeräts zu einem Zielpunkt oder Absetzpunkt und eine Waffenabsetz-Funktion zum Absetzen zumindest einer in der Waffenträger-Einrichtung mitführbaren Waffe aufgrund einer Vorgabe aufweist, - das Fluggerät eine jeweils der Steuerungs- und Missions-Funktion zugeordnete Funktion und eine Fluglagen-Sensorik aufweist, mit denen das Fluggerät um seine Längsachse soweit gedreht werden kann, so dass eine Komponente der resultierenden Auftriebskraft von der Rumpfunterseite aus entgegen der Schwerkraft-Richtung verläuft, und - der Flugrechner-Einrichtung ein Höhen-Sensor zugeordnet ist und die Steuerungs- und Missions-Funktion eine Geländefolgeflug-Funktion aufgrund der von dem Höhen-Sensor ermittelten Höhendaten aufweist.

US 9 180 967 B2 zeigt eine Ausführungsform einer Radarsignatur und induzierten Luftwiderstand minimierenden, extern montierbaren, intern konfigurierbaren Behälterstruktur, die durch Konfiguration und kinematische Bedienung einer Behältertüranordnung für die interne Platzierung eines oder mehrerer einsetzbarer Aufbewahrungsgegenstände vorgesehen ist. Die Behälterstruktur weist als eine Art Vielzweckbehälter ein extern montierbares Behältergehäuse mit vorbestimmter Querschnittskonfiguration, um ein konfigurierbares Innenvolumen bereitzustellen, das mehrere verschiedene Ladekonfigurationen aufnehmen kann, und mit einer vorbestimmten Behältergehäusekonfiguration mit einer Querschnittskonfiguration auf, die eine Radarsignatur und einen induzierten aerodynamischen Widerstand minimieren soll. Die Behältertüranordnung soll in das Behältergehäuse integriert sein und mehrere Behältertüren sowie eine oder mehrere Dichtungsanordnungen aufweisen, welche Auswurfhüllkurven steuern können sollen.

Herkömmliche Ansätze zur Aufnahme von Waffen an Tarnkappenluftfahrzeugen haben also den Nachteil, dass sie entweder mengenmäßigen Beschränkungen der jeweiligen Waffenbucht unterliegen, wenn die Tarnkappeneigenschaften des Luftfahrzeugs aufrechterhalten werden sollen, oder bei Mitnahme außen am Luftfahrzeug an jeweiligen Pylonen an den Tragflächen oder anderen Orten am Rumpf den gesamten Radarquerschnitt derartig vergrößern, dass sämtliche Vorteile sonstiger Tarnkappeneigenschaften dramatisch konterkarieren und damit die Überlebensfähigkeit des Luftfahrzeug drastisch reduzieren würden. Diese negativen Effekte lassen sich durch außen am Luftfahrzeug angebrachte Behälterstrukturen gemäß dem Stand der Technik zur Aufnahme verschiedenartiger zusätzlicher Waffen zwar zumindest dahingehend mindern, dass diese Behälter derart ausgestaltet sein können, dass sie sich nicht allzu negativ auf den Radarquerschnitt des Flugzeugs auswirken und darin aufgenommenen Waffen bis zum Abwurf verdecken. Allerdings erhöhen derartige Behälterstrukturen gemäß dem Stand der Technik stark den Luftwiderstand des Luftfahrzeugs und mindern damit sowie durch ihr Gewicht eine jeweils mögliche Maximalgeschwindigkeit sowie Überschallfähigkeit des Luftfahrzeugs, was sich wiederum negativ auf seine Leistungsfähigkeit und nicht zuletzt auf die mit den mitgeführten Waffen zu erzielenden maximalen Reichweiten auswirkt.

### Beschreibung

Es kann als Aufgabe betrachtet werden, einen Waffenbehälter für schwer ortbare Fahrzeuge, insbesondere Tarnkappenluftfahrzeuge, mit Überschallfähigkeiten bereitzustellen. Insbesondere wäre ein Waffenbehälter für solche Luftfahrzeuge bereitzustellen, der einerseits den Radarrückstreuquerschnitt des Fahrzeugs nicht oder allenfalls nur unwesentlich erhöht und anderseits die Maximalgeschwindigkeit des Luftfahrzeugs nicht oder allenfalls nur kaum mindert.

Diese Aufgabe wird durch den Gegenstand des unabhängigen Anspruchs 1 sowie des nebengeordneten Anspruchs 10 gelöst. Weitere Ausführungsformen ergeben sich aus den abhängigen Ansprüchen sowie aus der folgenden Beschreibung.

Insbesondere wird die Aufgabe gelöst durch einen Waffenbehälter für ein schwer ortbares Luftfahrzeug, insbesondere für ein überschallfähiges Tarnkappenluftfahrzeug, mit einem Aufnahmeraum für einen Lenkflugkörper, mit wenigstens zwei Behälterschalenelementen, die dazu ausgestaltet sind, in einem geschlossenen Zustand des Waffenbehälters den Aufnahmeraum zu umschließen und in einem geöffneten Zustand des Waffenbehälters den Aufnahmeraum zur Absetzung des Lenkflugkörpers zu öffnen, und mit einer Betätigungsvorrichtung, die dazu ausgestaltet ist, die wenigstens zwei Behälterschalenelemente zur Erreichung des geöffneten und/oder des geschlossenen Zustandes zumindest abschnittsweise gleichzeitig und/oder sequenziell zu betätigen.

Bei einem Luftfahrzeug, insbesondere überschallfähigem Tarnkappenluftfahrzeug, wird die Aufgabe insbesondere gelöst, indem dieses wenigstens einen entsprechenden Waffenbehälter umfasst.

Der Waffenbehälter kann extern am Luftfahrzeug befestigbar ausgestaltet sein. Beim Lenkflugkörper kann es sich beispielsweise um eine Lenkwaffe, wie eine Luft-Luft-Rakete für große Entfernungen handeln (*Beyond Visual Range* - *BVR*)*.* Die Betätigungsvorrichtung kann vollständig in den Waffenbehälter integriert ausgestaltet sein. Die Behälterschalenelemente können derart ausgestaltet sein, dass der Waffenbehälter einen geringen Radarquerschnitt aufweist. Dazu kann der Waffenbehälter ein möglichst schlankes Außenprofil mit geringen Radarquerschnitt aufweisen, was zudem dabei helfen kann, eine Überschallfähigkeit des Waffenbehälters bereitzustellen. Außenflächen des Waffenbehälters können Parallelwinkel zwischeneinander aufweisen, die auf Parallelwinkel der Außenflächen des Luftfahrzeugs abgestimmt sein können. Zusätzlich kann der Waffenbehälter zumindest abschnittsweise mit einer radarstrahlenabsorbierenden Beschichtung versehen sein. Die wenigstens zwei Behälterschalenelemente können im geschlossenen Zustand möglichst bündig aneinander liegen.

Auf diesem Wege kann ein Waffenbehälter bereitgestellt werden, der eine Waffe, wie beispielsweise eine Luft-Luft-Rakete bestimmten Typs, umschließt, sodass diese als Zusatzbewaffnung mitgeführt werden kann, ohne den Radarquerschnitt des Luftfahrzeugs wesentlich zu beeinträchtigen. Durch eine möglichst leichtgewichtige sowie schlanke bzw. kleine Ausgestaltung des Waffenbehälters kann zudem der Luftwiderstand des Waffenbehälters so gering gehalten sein, dass er die Maximalgeschwindigkeit des Luftfahrzeugs nicht oder nur kaum beeinflusst und damit dessen Überschallfähigkeit, d.h. Fähigkeit, mit Geschwindigkeiten größer als der Schallgeschwindigkeit zu fliegen, bewahrt. Erst zum Waffenabwurf kann sich der Waffenbehälter öffnen und eine daran aufgenommene Waffe bzw. deren Haltevorrichtung zum Abwurf der Waffe freigeben, um nur möglichst kurz die Haltevorrichtung preiszugeben, die ansonsten der Radarquerschnitt des Luftfahrzeugs negativ beeinflussen könnte.

Das Luftfahrzeug kann Pylonen unter seinen Tragflächen aufweisen, an denen der Waffenbehälter befestigbar ausgestaltet sein kann. Bei den Pylonen kann es sich um Standardpylonen handeln, wie sie beispielsweise zur Aufnahme von Außentanks vorgesehen sind. Die erfindungsgemäße Lösung hat also den Vorteil, dass ein über schallfähiger Waffenbehälter mit Tarnkappeneigenschaften bereitgestellt werden kann, der es an Standardpylonen befestigt ermöglicht, die Waffentragekapazitäten eines Luftfahrzeugs, insbesondere Tarnkappenluftfahrzeugs, zu erhöhen, ohne seinen Radarquerschnitt bedeutend zu vergrößern oder seine Maximalgeschwindigkeit wesentlich zu verringern.

Vorteilhafterweise kann ein entsprechender Waffenbehälter insbesondere so ausgestaltet sein, dass er einen Abwurf zusätzlich mitgeführter Waffen bei möglichst geringem Radarquerschnitt in der Frontansicht des Luftfahrzeugs ermöglicht. Durch einen vorzugsweisen kleinen Formfaktor des Waffenbehälters kann eine hohe Leistungsfähigkeit eines Luftfahrzeugs aufrechterhalten werden. Der kleine Formfaktor des Waffenbehälters kann dabei helfen, dass dieser nur einen sehr geringen deren Differenzluftwiderstand bewirkt. Der Waffenbehälter kann insbesondere derart auf die jeweils mitzuführende Waffe zugeschnitten sein, dass er möglichst klein und leicht ausgestaltet ist. Sogar für nicht dedizierte Tarnkappenluftfahrzeuge, wie beispielsweise Kampfflugzeuge der vierten Generation, wie der Eurofighter, kann ein derartiger Waffenbehälter vorteilhaft sein, weil er nicht wesentlich zum Radarquerschnitt beiträgt und etwaige den Radarquerschnitt negativ beeinflussende Elemente einer mitgeführten Waffe sowie deren Haltevorrichtung verdecken kann.

Gemäß einer Ausführungsform eines Waffenbehälters kann vorgesehen sein, dass die Betätigungsvorrichtung eine Antriebseinheit umfasst, die dazu ausgestaltet ist, die wenigstens zwei Behälterschalenelemente anzutreiben. So kann beispielsweise eine einzige Antriebseinheit vorgesehen sein, um die wenigstens zwei und/oder sämtliche Behälterschalenelemente zum Öffnen bzw. Schließen des Waffenbehälters zu betätigen. Dies kann dabei helfen, den Waffenbehälter möglichst klein und leicht sowie unkompliziert und verlässlich auszugestalten, was wiederum eine Integration des Waffenbehälters in ein Waffensystem bzw. Waffenträger vereinfacht.

Gemäß einer Ausführungsform eines Waffenbehälters kann vorgesehen sein, dass die Betätigungsvorrichtung eine mechanische Betätigungseinrichtung umfasst, die dazu ausgestaltet ist, die wenigstens zwei Behälterschalenelemente zumindest abschnittsweise gleichzeitig und/oder sequenziell nacheinander zu betätigen. So kann beispielsweise die Betätigungseinrichtung jeweilige Antriebskräfte der Antriebseinheit umsetzen, um die wenigstens zwei und/oder sämtliche Behälterschalenelemente zum Öffnen bzw. Schließen des Waffenbehälters zu betätigen. Dies kann weiter dabei helfen, den Waffenbehälter möglichst klein und leicht sowie unkompliziert und verlässlich auszugestalten, was abermals eine Integration des Waffenbehälters in ein Waffensystem bzw. Waffenträger vereinfacht.

Gemäß einer Ausführungsform eines Waffenbehälters kann vorgesehen sein, dass die Betätigungseinrichtung dazu eingerichtet ist, eine gleichzeitige und/oder sequenzielle Betätigung der wenigstens zwei Behälterschalenelemente zu bewirken. So kann die Antriebseinheit möglichst ohne elektronische Steuerung und/oder Sensorik derart mit der Betätigungseinrichtung zusammenwirken, dass eine gleichzeitige und/oder sequenzielle Betätigung der wenigstens zwei Behälterschalenelemente auf mechanischem Wege bewirkt wird. Somit können Abmaße und Gewicht des Waffenbehälters möglichst klein gehalten und seine unkomplizierte sowie verlässliche Betätigung ermöglicht werden, womit sich seine Integration in ein Waffensystem bzw. Waffenträger weiter vereinfachen lässt.

Gemäß einer Ausführungsform eines Waffenbehälters kann vorgesehen sein, dass die Betätigungseinrichtung eine Linearführungsanordnung und eine Übertragungsstangenanordnung umfasst, die dazu ausgestaltet sind, zur gleichzeitigen und/oder sequenziellen Betätigung der wenigstens zwei Behälterschalenelemente zusammenzuwirken. So kann die Antriebseinheit möglichst gleichmäßig auf die Linearführungsanordnung einwirken und auf die Übertragungsstangenanordnung einwirken. Linearführungsanordnung und Übertragungsstangenanordnung können somit verschiedenartige Behälterschalenelemente gleichzeitig und/oder sequenziell betätigen. Dies kann zusätzlich dabei helfen, den Waffenbehälter möglichst klein und leicht sowie unkompliziert und verlässlich auszugestalten, was eine Integration des Waffenbehälters in ein Waffensystem bzw. Waffenträger weiter vereinfacht.

Gemäß einer Ausführungsform eines Waffenbehälters kann vorgesehen sein, dass die Linearführungsanordnung einen Schlitten umfasst, der dazu eingerichtet ist, ab einer Mitnahmeposition über einen Mitnehmer die Übertragungsstangenanordnung zu betätigen. Schlitten und Mitnehmer können zur gleichzeitigen und/oder sequenzielle Betätigung der wenigstens zwei Behälterschalenelemente zusammenwirken. Dies kann weiter dabei helfen, den Waffenbehälter möglichst klein und leicht sowie unkompliziert und verlässlich auszugestalten, was eine Integration des Waffenbehälters in ein Waffensystem bzw. Waffenträger weiter vereinfacht.

Gemäß einer Ausführungsform eines Waffenbehälters kann vorgesehen sein, dass die wenigstens zwei Behälterschalenelemente einen linear verschieblich geführten Heckkonus und wenigstens eine klappbar gehaltene Schwenktür umfassen. Der Heckkonus kann entgegen einer Flugrichtung nach hinten ausfahrbar ausgestaltet sein sowie ein seinem hinteren Endabschnitt einen Luftauslass aufweisen. Zwei Schwenktüren können in einer Projektion entlang eines Querschnitts des Waffenbehälters zangenartig öffenbar ausgestaltet sein. So kann in einem ersten Abschnitt einer Sequenz zum Öffnen des Waffenbehälters zunächst der Heckkonus nach hinten fahren. In einem zweiten Abschnitt der Sequenz können sich die Schwenktüren öffnen, zum Beispiel indem jeder Schlitten mit dem mit Nehmer zusammen wirkt. Beispielsweise kann der Schlitten den Heckkonus betätigen. Die Übertragungsstangenanordnung kann die Schwenktüren betätigen. Beim Schließen können Heckkonus und Schwenktüren eine diese Sequenz in umgekehrter Reihenfolge durchführen. Auf diesem Wege lässt sich eine weitestgehend mechanisch gesteuerte Betätigungssequenz bereitstellen, was weiterhin dabei helfen kann, den Waffenbehälter möglichst klein und leicht sowie unkompliziert und verlässlich auszugestalten, was eine Integration des Waffenbehälters in ein Waffensystem bzw. Waffenträger vereinfachen hilft.

Gemäß einer Ausführungsform eines Waffenbehälters kann vorgesehen sein, dass die wenigstens zwei Behälterschalenelemente Stirnflächen mit integrierten Formschlussprofilen aufweisen, die im geschlossenen Zustand formschlüssig ineinandergreifen, um wenigstens einen Spalt zwischen den wenigstens zwei Behälterschalenelementen zu verschließen. Sich gegenüberliegende Profile können komplementär zueinander ausgestaltet sein. Auf diesem Wege lassen sich Radarquerschnitt und/oder Luftwiderstand des Waffenbehälters weiter verringern.

Gemäß einer Ausführungsform eines Waffenbehälters kann vorgesehen sein, dass seine Innenkontur eine Außenkontur des Lenkflugkörpers möglichst eng umschließend ausgestaltet ist. Beispielsweise kann der Waffenbehälter für eine jeweilige Waffe weitestgehend maßgeschneidert ausgestaltet sein und diese möglichst komplementär umschließen. So besitzen eine Vielzahl von Waffen, insbesondere Raketen, standardisierte Querschnitte und unterscheiden sich in ihren Ausnahmenabmaßen allenfalls durch die Positionierung ihrer Finne, Ruder, oder ähnlichem. Auf diesem Wege lassen sich Radarquerschnitt und/oder Luftwiderstand des Waffenbehälters möglichst gering halten. Dabei ist ein gewisser Sicherheitsabstand zwischen Waffenbehälter und Waffe einzuhalten, um Schäden durch von Vibrationen bewirkten gegenseitigen Berührungen zu vermeiden.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Perspektivansicht eines Ausführungsbeispiels eines Luftfahrzeugs, das zwei Waffenbehälter trägt.
- Fig. 2: eine schematische Unteransicht eines Ausführungsbeispiels Waffenbehälters im geschlossenen Zustand;
- Fig. 3: eine schematische Seitenansicht des in Fig. 2 gezeigten Ausführungsbeispiels eines Waffenbehälters;
- Fig. 4: eine schematische Vorderansicht des in Fig. 2 und 3 gezeigten Ausführungsbeispiels eines Waffenbehälters;
- Fig. 5: eine schematische halbtransparente Perspektivansicht des in Fig. 2 bis 4 gezeigten Ausführungsbeispiels eines Waffenbehälters seitlich von vorn oben;
- Fig. 6: eine schematische halbtransparente Perspektivansicht des in Fig. 2 bis 5 gezeigten Ausführungsbeispiels eines Waffenbehälters seitlich von hinten unten;
- Fig. 7: eine schematische halbtransparente Perspektivansicht des in Fig. 2 bis 6 gezeigten Ausführungsbeispiels eines Waffenbehälters seitlich von vorn oben in einem halbgeöffneten Zustand; und
- Fig. 8: eine schematische halbtransparente Perspektivansicht des in Fig. 2 bis 7 gezeigten Ausführungsbeispiels eines Waffenbehälters seitlich von vorn oben in einem geöffneten Zustand nach dem Absetzen einer Waffe.

### Detaillierte Beschreibung

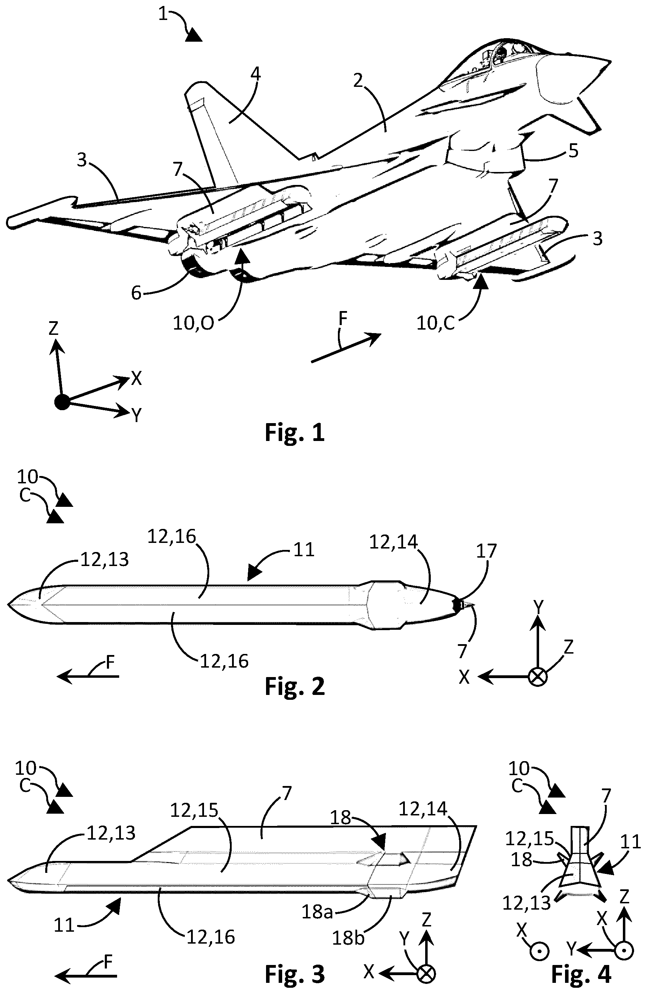

Fig. 1 zeigt eine schematische Perspektivansicht eines Luftfahrzeugs 1, vorzugsweise in Form eines Tarnklappenluftfahrzeugs. Das Luftfahrzeug 1 besitzt einen Rumpf 2, Flügel 3, ein Seitenleitwerk4 sowie Lufteinlässe 5 und Luftauslässe 6. Insbesondere im Bereich der Flügel 3, Seitenleitwerke 4 sowie Lufteinlässe 5 und Luftauslässe 6. An den beiden Flügeln 3 sind Pylonen 7 befestigt, die jeweils einen Waffenbehälter 10 tragen, von denen einer im geöffneten Zustand O und einer im geschlossenen Zustand C dargestellt ist. Das Luftfahrzeug 1 erstreckt sich in einer Längsrichtung X, Querrichtung Y und Höhenrichtung Z, die gemeinsam ein kartesisches Koordinatensystem aufspannen, wobei das Luftfahrzeug 1 dazu ausgestaltet ist, in einer in sich im Wesentlichen parallel zu Längsrichtung X verlaufenden Flugrichtung F zu fliegen

Fig. 2 zeigt eine schematische Unteransicht eines Ausführungsbeispiels Waffenbehälters 10 im geschlossenen Zustand C. Der Waffenbehälter 10 besitzt einen Gehäusekörper bzw. eine Schale 11 mit einer Reihe von Behälterschalenelementen 12. Beispielsweise ist ein Behälterschalenelement 12 als Frontkonus 13, eines als Heckkonus 14, sowie zwei als Seitenteile 15 (siehe Fig. 3) und zwei als Schwenktüren 16 ausgestaltet. Im geschlossenen Zustand C liegen die Behälterschalenelemente 12 mit ihren jeweiligen Außenkanten bündig aneinander an. An der Rückseite des Waffenbehälters 10 ist am hinteren Ende des Heckkonus ein Heckauslass 17 in der Schale 11 ausgeformt.

Fig. 3 zeigt eine schematische Seitenansicht des in Fig. 2 gezeigten Ausführungsbeispiels eines Waffenbehälters 10. Hier wird deutlich, dass Finnenaufnahmeabschnitte 18 in der Schale 11 ausgeformt sind. Die Finnenaufnahmeabschnitte 18 besitzen jeweils ein Vorderteil 18a und ein Hinterteil 18b. Im vorliegenden Ausführungsbeispiel ist ein oberes Vorderteil 18a am Seitenteil 16 und ein unteres Vorderteil 18a an der Schwenktür 16 angeordnet. Die Hinterteile 18b sind am Heckkonus 14 angeordnet.

Fig. 4 zeigt eine schematische Vorderansicht des in Fig. 2 und 3 gezeigten Ausführungsbeispiels eines Waffenbehälters10. Hier wird deutlich, dass die Finnenaufnahmeanschnitte 18 sich sternförmig von einer Mittelachse des Waffenbehälters 10 weg erstrecken. Die Seitenteile 15 des Waffenbehälters 10 gehen bündig in den Pylonen 7 über und stehen im gleichen Winkel relativ zum Pylon 7, also zu Höhenrichtung Z, wie Anströmkanten des Frontkonus 13 zur Querrichtung Y ausgerichtet sein können.

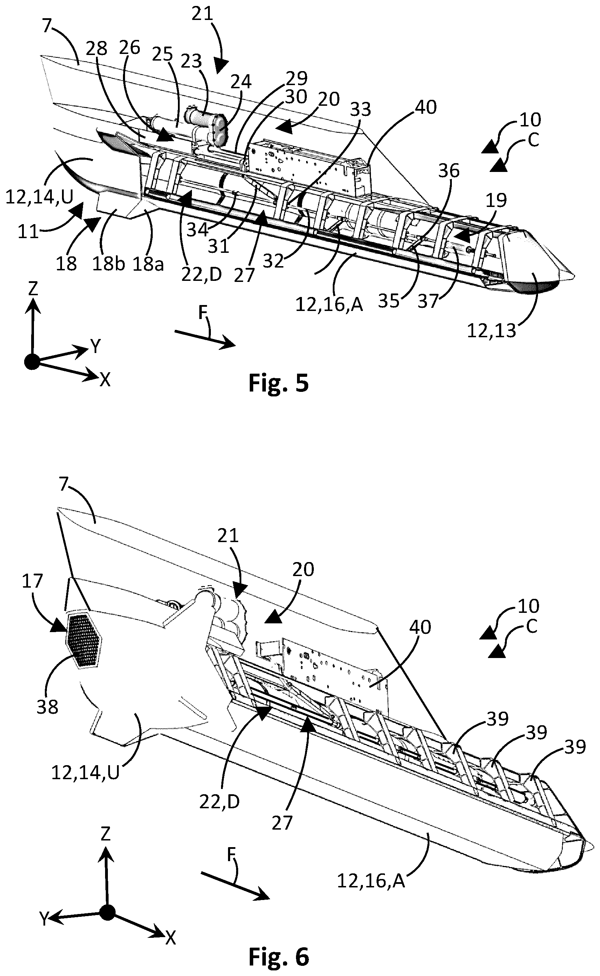

Fig. 5 zeigt eine schematische halbtransparente Perspektivansicht des in Fig. 2 bis 4 gezeigten Ausführungsbeispiels des Waffenbehälters 10 seitlich von vorn oben. In dieser halbtransparenten Ansicht sind die Seitenteile 15 weggelassen und der Pylon 7 ist dahingehend transparent dargestellt, dass von ihm nur die Außenkontur ersichtlich ist, sodass Einblick in einen Aufnahmeraum 19 des Waffenbehälters 10 gewährt wird. Der Aufnahmeraum 19 ist im geschlossenen Zustand C von der Schale 11 umschlossen und kann sich bis in den Pylonen 7 hinein erstrecken. Im Aufnahmeraum 19 ist eine Betätigungsvorrichtung 20 des Waffenbehälters 10 untergebracht.

Die Betätigungsvorrichtung 20 eine Antriebseinheit 21 und eine Betätigungseinrichtung 22. die Antriebseinheit 21 besitzt einen Motor 23, ein Getriebe 24 und einen Linearantrieb 25. Beim Motor 23 kann es sich um einen Elektromotor, beispielsweise einen Servo- oder Schrittmotor handeln, der über das Getriebe 24, beispielsweise ein einfaches Zahnradgetriebe mit einem Antriebsritzel auf einer Antriebsachse (nicht gezeigt) des Motors und einem Zahnrad auf eine Abtriebswelle des Linearantriebs 25. Der Linearantrieb 25 kann als Schneckentrieb o. ä. ausgestaltet sein.

Die Betätigungseinrichtung 22 kann eine Linearführungsanordnung 26 und eine Übertragungsstangenanordnung 27 umfassen. Die lineare Führungsanordnung 26 kann einen Schlitten 28 und zwei am Schlitten 28 befestigte Führungsstangen 29 umfassen, an deren Ende eine Brücke 30 befestigt ist. Der Schlitten ist wirkt auf den Heckkonus 14 ein und ist bewegungsübertragend mit dem Linearantrieb 25 der Antriebseinheit 21 gekoppelt, sodass er von dieser im Wesentlichen parallel zu Längsrichtung X antreibbar ausgestaltet ist. Die Brücke 30 ist über ein schrägstehendes Zwischengestänge 31 mit der Übertragungsstangenanordnung 27 verbunden, wobei Führungsstangen 29, Brücke 30 und/oder Zwischengestänge 31 schon als Teil der Übertragungsstangenanordnung 27 aufgefasst, d.h. als von dieser umfasst angesehen werden können.

Die Übertragungsstangenanordnung 27 umfasst eine zentrale Betätigungsstange 32, auf welcher das Zwischengestänge 31 über einen daran befestigten Geleitsschuh 33 entlang der Längsrichtung X verschiebbar gehalten ist, der die Betätigungsstange 32 umschließen kann. Im hier gezeigten geschlossenen Zustand C kann der Geleitsschuh 33 entgegen der Längsrichtung X auf der Betätigungsstange 32 gleiten, bis sie auf einen Mitnehmer 34 trifft. Des Weiteren umfasst die Übertragungsstangenanordnung 27 Hebelstangen 35, die einerseits über Gelenkselemente 36, beispielsweise in Form von Kugelgelenken, mit der Betätigungsstange 32 verbunden sind. Die Hebestangen 35 sind andererseits mit den Schwenktüren 16 verbunden, um diese auf und zu schwenken zu können.

Des Weiteren umfasst die Betätigungsvorrichtung 20 ein wenigstens ein Federelement 37. Das Federelement 37 kann einer durch die Antriebseinheit 21 erzeugten Antriebskraft entgegenwirken und dazu bestrebt sein, den Waffenbehälter 10 stets in den geschlossenen Zustand C zu bewegen. Im vorliegenden Ausführungsbeispiel ist die Betätigungsstange 32 an ihrem in Flugrichtung F weisenden Ende mit dem Federelement 37 kraftübertragend verbunden, das eine in Flugrichtung F weisende Federkraft aufbringt, welche dazu bestrebt ist, die Betätigungsstange 32 stets in eine vordere Endstellung D zu bewegen, in welcher sich der Waffenbehälter 10 im geschlossenen Zustand C befindet. Im hier gezeigten geschlossenen Zustand C befindet sich der Heckkonus 14 in einer vorderen Stellung U und die Schwenktüren 16 in einer geschlossenen Position A.

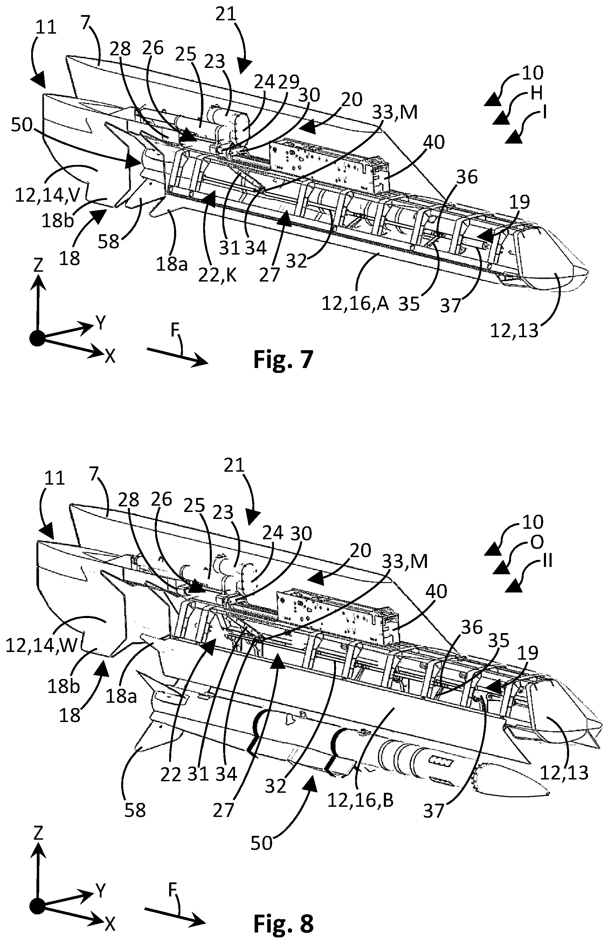

Fig. 6 zeigt eine schematische halbtransparente Perspektivansicht des in Fig. 2 bis 5 gezeigten Ausführungsbeispiels des Waffenbehälters 10 im geschlossenen Zustand C seitlich von hinten unten. Hier wird deutlich, dass der Heckauslass 17 durch ein Gitter 38 versehen bzw. derartig verschlossen sein kann, dass einerseits ein Antriebsstrahl daraus austreten kann und andererseits Radar absorbierende Eigenschaften des Gitters 38 genutzt werden, um den Radarquerschnitt des Luftfahrzeugs 1 möglichst gering zu halten. Des Weiteren ist ersichtlich, dass die Schwenktüren 16 an Spanten 39 des Waffenbehälters 10 über Scharniere (nicht gezeigt) schwenkbar beweglich gehalten sein können. Eine Haltevorrichtung 40 des Waffenbehälters 10 für eine Waffe 50 (siehe Fig. 7 und 8) kann in den Pylonen 7 hineinragen.

Fig. 7 zeigt eine schematische halbtransparente Perspektivansicht des in Fig. 2 bis 6 gezeigten Ausführungsbeispiels des Waffenbehälters 10 seitlich von vorn oben in einem halbgeöffneten Zustand H. Im halbgeöffneten Zustand H hat der Waffenbehälter 10 einen ersten Sequenzabschnitt I seiner Öffnungssequenz abgeschlossen. Im ersten Sequenzabschnitt I kann wenigstens eines der Behälterschalenelemente 12 sequenziell geöffnet worden sein bzw. werden, während andere oder übrige Behälterschalenelemente 12 noch nicht bewegt bzw. geöffnet wurden.

Im vorliegenden Ausführungsbeispiel ist in der ersten Eröffnungssequenz I der Heckkonus 14 in eine mittlere Stellung bzw. Zwischenstellung V gebracht, indem er ein Stück weit nach hinten, d. h. entgegen der Flugrichtung F bzw. Längsrichtung X bewegt wurde. Dazu kann die Antriebseinheit 21 den Schlitten 28 so weit bewegen, dass dieser den Heckkonus 14 in die Zwischenstellung V schiebt. Gleichzeitig kann die Betätigungseinrichtung 22 in eine Übergangsstellung K gebracht sein, in welcher der erste Sequenzabschnitt I in einen zweiten Sequenzabschnitt II (siehe Fig. 8) über geht. In der Übergangsstellung K kann sich die Übertragungsstangenanordnung 27 in einer Mitnahmeposition M befinden, ab welcher weitere Behälterschalenelemente 12, wie hier die Schwenktüren 16, mitbewegt werden.

Beispielsweise kann der Geleitsschuh 33 in der Mitnahmeposition M am Mitnehmer 34 zum Anliegen kommen. Dazu kann also die Linearführungsanordnung 26 den Schlitten 28, die Führungsstangen 29, die Brücke 30 und/oder das Zwischengestänge 31 so weit entgegen der Flugrichtung F bewegt haben, dass der Gleitschuh 33 entlang der bis dahin unbewegten Betätigungsstange 32 geglitten ist. Nunmehr liegt der Gleitschuh 33 entgegen der Flugrichtung F am Mitnehmer 34 an und kann diesen samt Betätigungsstange 32 entgegen der Flugrichtung F mit sich ziehen.

Des Weiteren ist die Waffe 50 bzw. deren Heck mit einer Finne 58 ersichtlich. Der Heckkonus ausgeformte Hinterteil 18b des Finnenaufnahmeabschnitts 18 ist entgegen der Flugrichtung F nach hinten von der Finne 58 weggezogen und hat diese somit freigegeben. Der an den Schwenktüren 16 ausgeformte Vorteil 18a des Finnenaufnahmeabschnittes 18 kann die Finne 58 noch zumindest umschließen oder wenigstens in einer Projektion entgegen der Flugrichtung F verdecken, womit die Waffe 50 im Aufnahmeraum 19 des Waffenbehälters 10 weiterhin weitestgehend vor aerodynamischen Einflüssen geschützt und gegen Radarerkennung verdeckt aufgenommen ist.

Fig. 8 zeigt eine schematische halbtransparente Perspektivansicht des in Fig. 2 bis 7 gezeigten Ausführungsbeispiels des Waffenbehälters 10 seitlich von vorn oben in einem geöffneten Zustand O nach dem Absetzen der Waffe 50. Zur Erreichung des geöffneten Zustandes O kann der Waffenbehälter 10 den zweiten Sequenzabschnitt II vollzogen haben. Dazu bzw. dabei können bestimmte Behälterscheinelemente 12 gleichzeitig betätigt werden. So können ab der Übergangstellung K beispielsweise der Heckkonus 14 und die Schwenktüren 16 gleichzeitig bewegt werden, wobei der Frontkonus starr bzw. unbeweglich ausgestaltet sein kann.

Im vorliegenden Ausführungsbeispiel kann dazu die Antriebseinheit 21 den Schlitten 28 weiter entgegen der Flugrichtung F bewegen. Der Schlitten 28 kann dabei den Heckkonus 14 entgegen der Flugrichtung F weiter lineare Verfahren ist dieser sich in einer hinteren Stellung W befindet. Gleichzeitig kann die Linearführungsanordnung 26 den Schlitten 28, die Führungsstangen 29, die Brücke 30 und/oder das Zwischengestänge 31 soweit entgegen der Flugrichtung F bewegt haben, dass der Gleitschuh 33 den Mitnehmer 34 samt Betätigungsstange 32 entgegen der Flugrichtung F mit sich ziehen und damit die Hebelstangen 35 um ihre Gelenkelemente 36 drehen, wodurch die Hebestangen 25 die Schwenktüren 16 betätigen, indem sie sie auf schwenken und damit den Aufnahmeraum 19 samt darin aufgenommener Waffe 50 freigeben. In der nunmehr erreichten offenen Stellung O des Waffenbehälters 10 haben der Hinterteil 18b des Finnenaufnahmeabschnitts 18 sowie der Vorderteil 18a des Finnenaufnahmeabschnittes 18 an der Schwenktür 16 die die Finnen 58 der Waffe 50 vollständig freigegeben.

Die Waffe 50 kann nunmehr von der Haltevorrichtung 40 abgesetzt werden, beispielsweise in dem die Haltevorrichtung 40 als Außenwerfer ausgestaltet ist, der die Waffe 50 entgegen der Höhenrichtung Z aus dem Aufnahmeraum 19 herausstößt. Die Waffe 50 kann nunmehr ihr Triebwerk zünden. Nach dem Absetzen der Waffe 50 kann der Waffenbehälter 10 eine Schließsequenz vollziehen, die zuerst den zweiten Sequenzabschnitt II und dann den ersten Sequenzabschnitt I durchläuft. Mit anderen Worten kehrt sich die Öffnungssequenz zum Schließen um. Dabei können bzw. kann die Antriebseinheit und/oder 21 das Federelement 37 die erforderlichen Schließkräfte aufbringen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Luftfahrzeug / Tarnkappenluftfahrzeug
- 2: Rumpf
- 3: Flügel
- 4: Seitenleitwerk
- 5: Lufteinlass
- 6: Luftauslass
- 7: Pylon

- 10: Waffenbehälter
- 11: Gehäusekörper / Schale
- 12: Behälterschalenelement
- 13: Frontkonus
- 14: Heckkonus
- 15: Seitenteil
- 16: Schwenktür
- 17: Heckauslass
- 18: Finnenaufnahmeabschnitt
- 18a: Vorderteil
- 18b: Hinterteil
- 19: Aufnahmeraum

- 20: Betätigungsvorrichtung
- 21: Antriebseinheit
- 22: Betätigungseinrichtung
- 23: Motor
- 24: Getriebe
- 25: Linearantrieb
- 26: Linienführungsanordnung
- 27: Übertragungsstangenanordnung
- 28: Schlitten
- 29: Führungsstange

- 30: Brücke
- 31: Zwischengestänge
- 32: Betätigungsstange
- 33: Gleitschuh
- 34: Mitnehmer
- 35: Hebelstangen
- 36: Gelenkelemente
- 37: Federelement
- 38: Gitter
- 39: Spant

- 40: Haltevorrichtung

- 50: Waffe / Lenkflugkörper
- 58: Finne

- I: erster Sequenzabschnitt
- II: zweiter Sequenzabschnitt

- A: geschossene Position
- B: geöffnete Position
- C: geschlossener Zustand
- D: vordere Endstellung
- E: hintere Endstellung

- F: Flugrichtung
- H: halbgeöffneter Zustand
- K: Übergangstellung
- M: Mitnahmeposition
- O: geöffneter Zustand
- S: Waffenrückhaltezustand
- R: Waffenfreigabezustand
- U: vordere Stellung
- V: Zwischenstellung / mittlere Stellung
- W: hintere Stellung
- X: Längsrichtung
- Y: Querrichtung
- Z: Höhenrichtung

## Patentansprüche

1. Waffenbehälter (10) für ein schwer ortbares Luftfahrzeug (1), insbesondere für ein überschallfähiges Tarnkappenluftfahrzeug,
mit einem Aufnahmeraum (19) für einen Lenkflugkörper (50),
mit wenigstens zwei Behälterschalenelementen (12), die dazu ausgestaltet sind, in einem geschlossenen Zustand (C) des Waffenbehälters (10) den Aufnahmeraum (19) zu umschließen und in einem geöffneten Zustand (O) des Waffenbehälters (10) den Aufnahmeraum (19) zur Absetzung des Lenkflugkörpers (50) zu öffnen, und
mit einer Betätigungsvorrichtung (20), die dazu ausgestaltet ist, die wenigstens zwei Behälterschalenelemente (12) zur Erreichung des geöffneten und/oder des geschlossenen Zustandes zumindest abschnittsweise gleichzeitig und/oder sequenziell zu betätigen.

2. Waffenbehälter (10) nach Anspruch 1, **dadurch gekennzeichnet, dass** die Betätigungsvorrichtung (20) eine Antriebseinheit (21) umfasst, die dazu ausgestaltet ist, die wenigstens zwei Behälterschalenelemente anzutreiben.

3. Waffenbehälter (10) nach Anspruch 1 oder 2, **dadurch gekennzeichnet, dass** die Betätigungsvorrichtung (20) eine mechanische Betätigungseinrichtung (22) umfasst, die dazu ausgestaltet ist, die wenigstens zwei Behälterschalenelemente (12) zumindest abschnittsweise gleichzeitig und/oder sequenziell nacheinander zu betätigen.

4. Waffenbehälter (10) nach Anspruch 3, **dadurch gekennzeichnet, dass** die Betätigungseinrichtung (22) dazu eingerichtet ist, eine gleichzeitige und/oder sequenzielle Betätigung der wenigstens zwei Behälterschalenelemente (12) zu bewirken.

5. Waffenbehälter (10) nach Anspruch 3 oder 4, **dadurch gekennzeichnet, dass** die Betätigungseinrichtung (12) eine Linearführungsanordnung (26) und eine Übertragungsstangenanordnung (27) umfasst, die dazu ausgestaltet sind, zur gleichzeitigen und/oder sequenziellen Betätigung der wenigstens zwei Behälterschalenelemente (12) zusammenzuwirken.

6. Waffenbehälter (10) nach Anspruch 5, **dadurch gekennzeichnet, dass** die Linearführungsanordnung (26) einen Schlitten (28) umfasst, der dazu eingerichtet ist, ab einer Mitnahmeposition (M) über einen Mitnehmer (34) die Übertragungsstangenanordnung (27) zu betätigen.

7. Waffenbehälter (10) nach wenigstens einem der Ansprüche 1 bis 6, **dadurch gekennzeichnet, dass** die wenigstens zwei Behälterschalenelemente (12) einen linear verschieblich geführten Heckkonus (14) und wenigstens eine klappbar gehaltene Schwenktür (16) umfassen.

8. Waffenbehälter (10) nach wenigstens einem der Ansprüche 1 bis 7, **dadurch gekennzeichnet, dass** die wenigstens zwei Behälterschalenelemente (12) Stirnflächen mit integrierten Formschlussprofilen aufweisen, die im geschlossenen Zustand formschlüssig ineinandergreifen, um wenigstens einen Spalt zwischen den wenigstens zwei Behälterschalenelementen (12) zu verschließen.

9. Waffenbehälter (10) nach wenigstens einem der Ansprüche 1 bis 8, **dadurch gekennzeichnet, dass** seine Innenkontur eine Außenkontur des Lenkflugkörpers (50) möglichst eng umschließend ausgestaltet ist.

10. Luftfahrzeug (1), insbesondere überschallfähiges Tarnkappenluftfahrzeug, **gekennzeichnet durch** wenigstens einen Waffenbehälter (10) nach wenigstens einem der Ansprüche 1 bis 9.
